# FASCICULE DE BREVET EUROPEEN

(11) **EP 1 918 600 B1**
(45) Date de publication et mention de la délivrance du brevet: **28.08.2013**
(21) Numéro de dépôt: 07119660.4
(22) Date de dépôt: 30.10.2007
(51) Int. Cl.: F16D 13/75

(54) **Embrayage pour véhicules automobiles à moyens de centrage du cordon rampe sur le plateau de pression**
Kupplung für Kraftfahrzeuge mit Zentrierungsmitteln für die Rampe auf der Druckplatte
Clutch for automobiles with means for centring the ramp on the pressure plate

(30) Priorité: 30.10.2006 FR 0654635
(43) Date de publication de la demande: 07.05.2008
(73) Titulaire: Valeo Embrayages, 80009 Amiens (FR)
(72) Inventeur: Osman, Hafiz, 80000, Amiens (FR); Payraudeau, Gilles, 80310, Saint Vaast en Chaussée (FR); Graton, Michel, 75020, Paris (FR); Maquinghen, Hervé, 80310, Saint Vaast en Chaussée (FR)
(74) Mandataire: Tran, Chi-Hai

(56) Documents cités:
- FR-A1- 2 774 441
- FR-A1- 2 785 954

## Description

La présente invention concerne le domaine des embrayages pour véhicules automobile, destinés à assurer la jonction mécanique et de transmission entre le moteur du véhicule et la boîte de vitesses.

Les embrayages comportent de manière connue :
-- D'une part : un volant moteur lié au moteur du véhicule, et entraînant en rotation l'ensemble du mécanisme de l'embrayage à savoir un élément annulaire, dénommé « couvercle », incluant à l'intérieur un plateau de pression annulaire, et un élément de commande dénommé diaphragme ;
-- D'autre part : un disque de friction pourvu de garnitures de friction, entraînant la rotation de l'arbre primaire de boîte de vitesses.

La position débrayée ou embrayée est commandée par l'utilisateur par l'intermédiaire d'une pédale qui déplace une butée, disposée sur l'arbre primaire de boîte de vitesses. La butée actionne le diaphragme qui commande le déplacement axial du plateau de pression, de manière que ce dernier porte contre le disque de friction et entraîne donc celui-ci (position embrayée), ou est décalé par rapport au disque de friction (position débrayée).

Les embrayages connus comportent des dispositifs dits de « rattrapage de jeu » destinés à faire en sorte notamment que la distance parcourue par le plateau de pression, dite « la levée de plateau », soit sensiblement constante au fur et à mesure de l'usure du disque de friction.

La demande de brevet européen n° 0 769 632 décrit un tel dispositif.

Ce dernier, de manière connue, comporte entre autre un élément intermédiaire entre le plateau de pression et le diaphragme, de forme annulaire, et portant contre le plateau de pression par des rampes complémentaires de rampes prévues sur ledit plateau. Ledit élément intermédiaire de contact est dénommé « cordon rampe».

Compte tenu des déplacements extrêmement faibles du cordon par rapport au plateau de pression, la précision non seulement de fabrication, mais de mise en place du cordon rampe sur le plateau est primordiale.

Plus particulièrement, il importe de centrer parfaitement le cordon rampe sur le plateau, par rapport à l'axe de rotation.

A ce jour, le cordon rampe est centré sur le plateau par des éléments en saillie usinés sur le plateau, comme décrit dans le document FR-2 774 441A1.

Or, cet usinage est une opération complexe et onéreuse.

On a tenté de s'affranchir de ces éléments de centrage usinés, comme décrit dans la demande de brevet français n° 2 746 467, en mettant en place des goujons de guidage répartis sur la périphérie d'un élément centré par rapport à l'axe de rotation et s'étendant axialement.

Cependant, ce dispositif connu est complexe et ne donne pas satisfaction.

La présente invention vise à remédier au problème mentionné ci-dessus et propose un ensemble plateau de pression / cordon rampe, inclus dans un mécanisme d'embrayage pour véhicules automobiles, et réalisé de manière que le cordon rampe soit centré parfaitement sur le plateau de pression, et ce de manière économique, tant au niveau de la fabrication que du montage.

A cette fin, selon invention, l'embrayage pour véhicule automobile, du type comprenant d'une part un volant moteur entraînant en rotation un couvercle annulaire ainsi qu'un plateau de pression, et un diaphragme, et d'autre part un disque pourvu de garnitures de friction destiné à être a lié à l'arbre primaire de boîte de vitesses, l'embrayage comportant en outre un dispositif de rattrapage de jeu, apte à ramener axialement le plateau de pression vers le disque de friction, au fur et à mesure de l'usure de ce dernier, et dans lequel un élément intermédiaire annulaire (ou cordon rampe) est agencé entre le plateau de pression et le diaphragme, et porte contre le plateau de pression par des rampes complémentaires des rampes prévues sur ledit plateau,
le cordon rampe étant centré dans un alésage intérieur du plateau de pression et présentant au moins une paroi de direction axiale, caractérisé en ce que des éléments en saillie sont formés
- par au moins une partie de la paroi d'appui du cordon rampe, destinée à porter contre l'alésage intérieur du plateau, ou
- par au moins une partie de l'alésage intérieur du plateau destiné à porter contre la paroi d'appui du cordon rampe.

Afin de réduire la surface d'appui du cordon rampe sur le plateau et éviter ainsi le risque d'échauffement, ladite paroi d'appui du cordon rampe comporte au moins une patte ou languette.

Avantageusement, il est prévu plusieurs pattes ou languettes, réparties sur la périphérie du cordon rampe.

Les pattes sont planes, c'est-à-dire parallèles à la direction axiale, ou encore alternativement elles forment un angle par rapport à cette dernière.

Selon une forme de réalisation, le cordon rampe comporte un flanc intérieur annulaire continu (en forme de bague) apte à porter contre ledit alésage du plateau.

De préférence, au moins une partie de la paroi d'appui du cordon rampe, destinée à porter contre l'alésage intérieur du plateau, comporte des éléments en saillie.

Les éléments en saillie forment des surfaces, lignes ou série de points de contacts avec l'alésage intérieur du plateau.

De préférence, les lignes de contacts sont circonférentielles.

Lesdits éléments en saillie sont constitués de bossages, bombements, ou similaires.

Lesdits éléments en saillie sont disposés soit sur la ou les pattes, soit sur l'alésage du plateau (alésage réalisé à surface interrompue).

L'invention concerne également un ensemble plateau de pression / cordon rampe, pour un embrayage à friction pour véhicule automobile,
le cordon rampe étant centré dans un alésage interne du plateau de pression au moyen de pattes axiales du cordon rampe qui sont en appui radial sur l'alésage interne du plateau de pression, caractérisé en ce que des éléments en saillie sont formés
- par au moins une partie des pattes axiales du cordon rampe, destinée à poiler contre l'alésage intérieur du plateau, ou
- par au moins une partie de l'alésage intérieur du plateau destiné à porter contre les pattes axiales du cordon rampe.

L'invention sera bien comprise à la lumière de la description qui suit, se rapportant à des exemples illustratif mais non limitatifs, en liaison avec les dessins annexés dans lesquels :
La figure 1 est une vue partielle en coupe axiale d'un embrayage auquel s'applique l'invention ;
La figure 2 montre en perspective un plateau de pression et un cordon rampe associé ;
La figure 3 est une vue tronquée selon un plan axial de l'ensemble de la figure 2 ; et
La figure 4 est une vue agrandie montrant un détail de la figure 3.

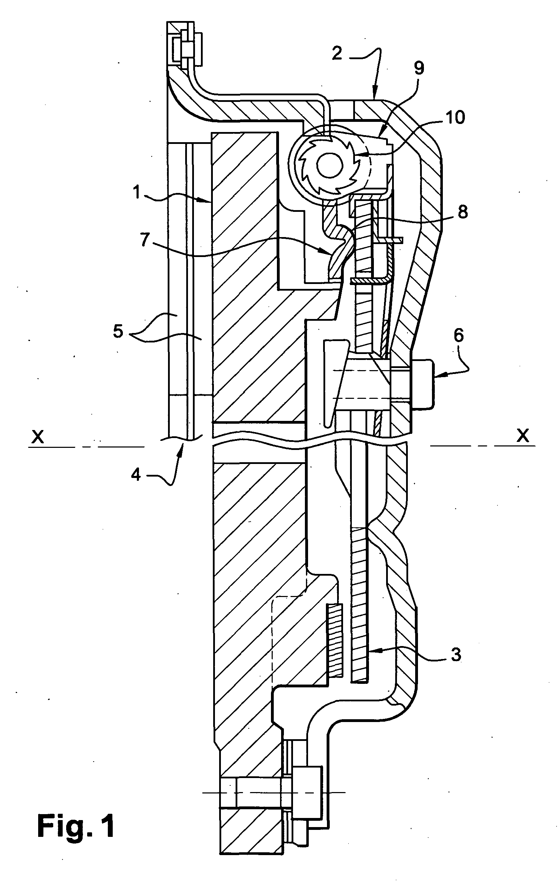

En référence à la vue en coupe axiale de la figure 1, on décrit ci-après une partie d'un embrayage pour véhicule automobile, auquel s'applique la présente invention. Seule une partie des éléments est présentement décrite, et l'homme de l'art pourra trouver de plus amples informations concernant l'embrayage dans sa généralité, dans la demande de brevet européen n° 0 769 632.

Les embrayages à friction pour véhicule automobile comportent de manière générale un mécanisme incluant un volant moteur (non représenté et connu en lui-même) entraîné par le moteur, un plateau de pression 1, disposé dans un élément creux 2, appelé couvercle, et un élément d'actionnement appelé diaphragme 3. Ces éléments sont entraînés en rotation par un arbre (non représenté) symbolisé par l'axe X-X, et reliant en amont le moteur, et en aval une boîte de vitesses (non représentée).

A des fins de meilleure compréhension, la notion de « radial » employée ci-après se réfère à une direction transversale à l'axe longitudinal X-X, et « axial » à une direction parallèle audit axe.

Un mécanisme à pédale et bague, non représenté et connu en lui-même, agit sur le diaphragme 3 qui déplace axialement le plateau de pression 1 de manière que celui-ci frotte contre un disque de friction 4 portant des garnitures de friction 5. Le diaphragme 3 et le couvercle 2 sont reliés par des corps cylindriques 6, ou tout autre dispositif permettant l'articulation du diaphragme.

Le diaphragme 3 porte contre le plateau de pression /cordon rampe 1 par l'intermédiaire de moyens à rampe 7, selon une zone d'appui 8. Les moyens à rampe comportent un élément annulaire (appelé communément « cordon rampe »), pourvu sur une face de rampes, susceptibles de coopérer avec des rampes complémentaires prévues sur la face en regard du plateau de pression 1 (ci-après dénommé plateau 1).

Il est prévu également un mécanisme 9 de rattrapage de jeu, connu en lui-même, et décrit plus en détail dans la demande de brevet mentionnée ci-dessus. Ce mécanisme 9 est destiné à déplacer axialement le plateau de pression à une distance optimale, quelque soit le degré d'usure des garnitures de friction 5.

Le mécanisme 9 de rattrapage de jeu inclut une roue à rochets 10 montée sur un axe sur lequel est disposée une vis sans fin (non représentée).

La vis sans fin coopère avec une partie de roue dentée, constituée d'un secteur annulaire denté, solidaire du cordon rampe 11.

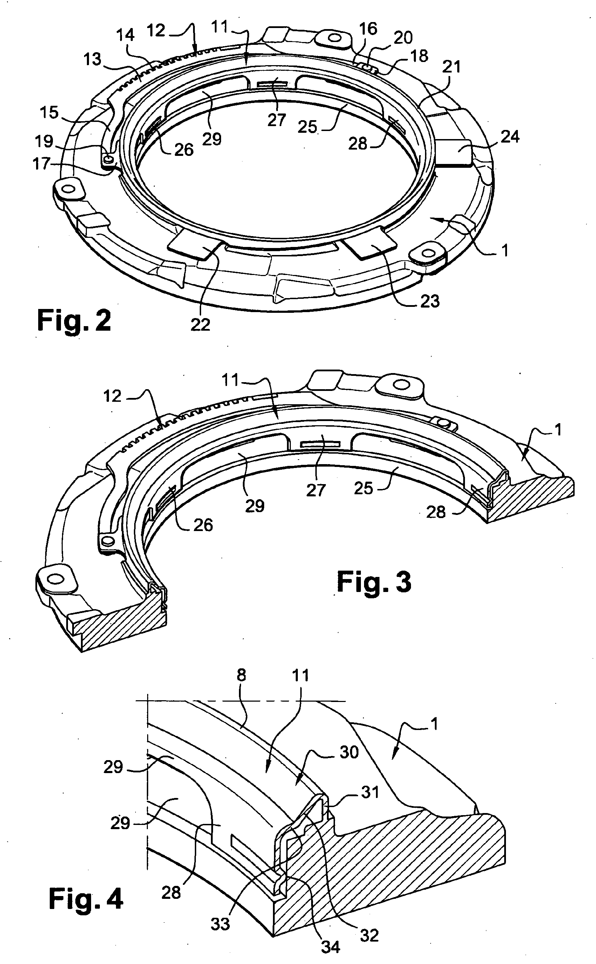

La figure 2 montre en perspective, selon l'invention, le plateau 1 sur lequel est rapporté et maintenu le cordon rampe 11. Sur la périphérie de ce dernier est rapporté et fixé un secteur denté 12 connu en lui-même et comportant un secteur circulaire 13 pourvu de dents 14 coopérant avec la vis sans fin du dispositif de rattrapage de jeu.

À chaque extrémité du secteur denté circulaire 13 est prévue une aile latérale respectivement 15 et 16, de forme courbe. L'extrémité distale de chaque aile 15 et 16 est fixée, de manière connue sur le cordon rampe, sur une patte 17, respectivement 18, par des rivets 19 et 20.

Le cordon rampe 11 est de forme annulaire et présente un bord périphérique 21 (opposé au plateau 1) destiné à constituer la zone d'appui 8 (voir figure 1) entre le cordon rampe 11 et le diaphragme 3.

Accessoirement, le cordon rampe 11 comporte des languettes radiales 22, 23 et 24, au nombre de trois sur la réalisation montrée, et qui constituent des moyens d'équilibrage du secteur denté, et faisant l'objet d'une demande de brevet déposée ce même jour, au nom de la demanderesse.

De manière connue, un alésage intérieur annulaire 25 du plateau 1 est usiné.

Selon la présente invention, afin de disposer le cordon rampe de manière parfaitement centrée (concentriquement) sur le plateau, le cordon rampe 11 comporte des éléments de centrage sur l'alésage intérieur central 25 du plateau 1. Ces éléments exercent des forces d'appui radiales sur le dit alésage.

Ces éléments d'appui et de centrage sont constitués d'une série de pattes 26, 27 et 28, disposées selon une direction axiale, et réparties, de préférence uniformément, sur la périphérie de l'anneau intérieur 29 du cordon rampe 11.

Plus précisément, selon l'exemple particulier montré sur les figures, les pattes de centrage comportent :
- une première et une seconde pattes sensiblement identiques 26 et 27 placées en l'espèce au niveau (à proximité) du secteur denté 12, d'une longueur circonférentielle de l'ordre de 40 à 60 mm ;
- une troisième patte 28, à l'opposé des deux premières et formant une sorte de portion de bague, et dont la longueur circonférentielle est de l'ordre d'un demi périmètre, soit entre environ 250 et 400 mm.

A noter que la vue en perspective de la figure 1 ne montre qu'une partie de ladite troisième patte 28 de centrage, tandis que la figure 2 n'en montre qu'une extrémité.

Egalement selon l'invention, les pattes de centrage 26, 27 et 28 ne portent pas sur l'alésage intérieur 25 du plateau 1 par leur surface entière, mais selon une partie de la surface de chaque patte. La zone d'appui et de contact est une série de points, ou une ou plusieurs lignes, ou une surface (inférieure à la surface totale de la patte).

Il est fait référence à la figure 4 qui est une vue agrandie de détail montrant l'extrémité de la patte de centrage 28 en position contre le plateau 1.

Le cordon rampe 11 comprend de manière connue un corps 30 en métal plié/embouti, comprenant successivement, suivant un sens centripète :
- un flanc d'appui 31, de direction axiale, portant par son bord distal contre la surface du plateau 1 ;
- un flanc **32,** suivant un plan incliné par rapport au plan du plateau 1;
- un flanc plat 33 (dans un plan radial) en appui sur l'arête de l'alésage intérieur 25 du plateau 1 ;
- et des pattes de centrage (en l'occurrence la patte 28 sur la figure 4).

De préférence, chaque patte de centrage 26, 27 et 28 est pourvue d'éléments en saillie ou est conformée de façon qu'une partie seulement de sa surface tournée vers l'alésage intérieur 25 du plateau 1 porte contre celui-ci.

Les éléments en saillie forment des surfaces, lignes ou série de points de contacts avec l'alésage intérieur du plateau, de préférence selon une direction circonférentielle.

Sur les figures, lesdits éléments en saillie sont constitués d'un bossage, bombement, ou similaire, référencé 34 (figure 4), et réalisé par exemple par emboutissage de la patte de centrage correspondante, de manière à créer une zone d'appui et de contact selon une ligne, ici de forme circonférentielle.

Selon une variante non représentée, les éléments en saillie peuvent être prévus sur l'alésage intérieur du plateau, de manière à porter contre les pattes du cordon rampe ; les pattes sont alors planes.

Les zones de centrage et d'appui radial du cordon rampe 11 sur l'alésage intérieur 25 du plateau 1, peuvent présenter sur chaque patte de centrage, des formes différentes, telles que par exemple :
- une ou des séries de ligne(s) de contact, selon des directions différentes (axiale, radiale, inclinée)
- des séries de points, alignés ou répartis de façon homogène sur la surface correspondante de la patte de centrage ;
- des éléments de surface en forme de patins, de forme carrée, ronde, rectangle ou ovale.

Les pattes peuvent également être constituées d'un flanc bombé arqué, dont la concavité est tournée vers l'axe X-X, et portant ainsi par une ligne de contact sur l'alésage intérieur 25 du plateau 1 par la ligne de concavité de la patte.

## Revendications

1. Embrayage pour véhicule automobile, du type comprenant d'une part un volant moteur entraînant en rotation un couvercle annulaire (2) ainsi qu' un plateau de pression (1) et un diaphragme (3), et d'autre part un disque (4) pourvu de garnitures de friction (5), destiné à être lié à un arbre primaire de boîte de vitesses, l'embrayage comportant en outre un dispositif (9) de rattrapage de jeu, apte à ramener axialement le plateau de pression (1) vers le disque de friction (4), au fur et à mesure de l'usure de ce dernier, et dans lequel un élément intermédiaire annulaire (11) (ou cordon rampe) est agencé entre le plateau de pression (1) et le diaphragme (3), et porte contre le plateau de pression (1) par des rampes complémentaires des rampes prévues (11) sur ledit plateau (1),
le cordon rampe (11) étant centré dans un alésage (25) intérieur du plateau de pression (1) et présentant au moins une paroi de direction axiale, caractérisé en que des éléments en saillie sont formés
- par au moins une partie de la paroi d'appui du cordon rampe, destinée à porter contre l'alésage intérieur du plateau, ou
- par au moins une partie de l'alésage intérieur (25) du plateau (1) destiné à porter contre la paroi d'appui du cordon rampe (11).

2. Embrayage selon la revendication 1, **caractérisé en ce que** ladite paroi d'appui du cordon rampe comporte au moins une patte ou languette (26, 27, 28).

3. Embrayage selon la revendication 2, **caractérisé en ce qu'**il est prévu plusieurs pattes ou languettes (26, 27, 28), réparties sur la périphérie du cordon rampe (11).

4. Embrayage selon la revendication 2 ou 3, **caractérisé en ce que** les pattes (26, 27) sont planes, c'est-à-dire parallèles à la direction axiale, ou forment un angle par rapport à cette dernière.

5. Embrayage selon l'une des revendications 1 à 4, **caractérisé en ce que** le cordon rampe (11) comporte un flanc intérieur annulaire continu (en forme de bague) apte à porter contre ledit alésage du plateau de pression.

6. Embrayage selon l'une des revendications 1 à 5, **caractérisé en ce que** les éléments en saillie (34) forment des surfaces, lignes ou série de points de contact.

7. Embrayage selon ia revendication 6, **caractérisé en ce que** les lignes de contact sont circonférentielles.

8. Embrayage selon l'une des revendications 1 à 7, **caractérisé en ce que** lesdits éléments en saillie (34) sont constitués de bossages, bombements, ou similaires.

9. Ensemble plateau de pression et cordon rampe, pour un embrayage automobile selon l'une des revendications 1 à 8, le cordon rampe (11) étant centré dans un alésage interne du plateau de pression (1) au moyen de pattes axiales (26, 27, 28) du cordon rampe qui sont en appui radial sur l'alésage interne du plateau de pression, **caractérisé en ce que** des éléments en saillie sont formés
- par au moins une partie des pattes axiales (26, 27, 28) du cordon rampe, destinée à porter contre l'alésage intérieur du plateau, ou
- par au moins une partie de l'alésage intérieur (25) du plateau (1) destiné à porter contre les pattes axiales (26, 27, 28) du cordon rampe (11).

## Patentansprüche

1. Kupplung für Kraftfahrzeuge, umfassend einerseits ein Antriebsschwungrad, welches einen ringförmigen Deckel (2) sowie eine Druckplatte (1) und eine Membranfeder (3) rotatorisch antreibt, und andererseits eine mit Reibbelägen (5) versehene Scheibe (4), die dazu bestimmt ist, mit einer Primärwelle eines Getriebes verbunden zu werden, wobei die Kupplung außerdem eine Vorrichtung (9) zum Ausgleichen von Spiel umfasst, die dazu geeignet ist, die Druckplatte (1) axial in Richtung zu der Reibungsscheibe (4) in dem Maße des Verschleißes von letzterer zurück zu versetzen, und wobei ein ringförmiges Zwischenelement (11) (oder Rampen-Strang) zwischen der Druckplatte (1) und der Membranfeder (3) angeordnet ist und die Druckplatte (1) durch Rampen beansprucht, die komplementär sind zu auf der besagten Platte (1) vorgesehenen Rampen (11),
wobei der Rampen-Strang (11) in einer inneren Bohrung (25) der Druckplatte (1) zentriert ist und zumindest eine axial ausgerichtete Wand aufweist, **dadurch gekennzeichnet, dass** vorspringende Elemente gebildet sind
- durch mindestens einen Teil der Auflagewand des Rampen-Strangs, der dazu bestimmt ist, die innere Bohrung der Platte zu beanspruchen, oder
- durch mindestens einen Teil der inneren Bohrung (25) der Platte (1), der dazu bestimmt ist, die Auflagewand des Rampen-Strangs (11) zu beanspruchen.

2. Kupplung nach Anspruch 1, **dadurch gekennzeichnet, dass** die besagte Auflagewand des Rampen-Strangs mindestens eine Lasche oder Zunge (26, 27, 28) umfasst.

3. Kupplung nach Anspruch 2, **dadurch gekennzeichnet, dass** mehrere über den Umfang des Rampen-Strangs (11) verteilte Laschen oder Zungen (26, 27, 28) vorgesehen sind.

4. Kupplung nach Anspruch 2 oder 3, **dadurch gekennzeichnet, dass** die Laschen (26, 27) eben, das heißt parallel zu der axialen Richtung, sind oder einen Winkel relativ zu letzterer bilden.

5. Kupplung nach einem der Ansprüche 1 bis 4, **dadurch gekennzeichnet, dass** der Rampen-Strang (11) eine durchgehende innere ringförmige Seite (in Form einer Banderole) umfasst, die geeignet ist, die besagte Bohrung der Druckplatte zu beanspruchen.

6. Kupplung nach einem der Ansprüche 1 bis 5, **dadurch gekennzeichnet, dass** die vorspringenden Elemente (34) Kontakt-Oberflächen, Kontakt-Linien oder eine Reihe von Kontakt-Punkten bilden.

7. Kupplung nach Anspruch 6, **dadurch gekennzeichnet, dass** die Kontakt-Linien kreislinienförmig sind.

8. Kupplung nach einem der Ansprüche 1 bis 7, **dadurch gekennzeichnet, dass** die vorspringenden Elemente (34) durch Buckel, Wölbungen oder ähnliches gebildet sind.

9. Einheit aus Druckplatte und Rampen-Strang für eine Kraftfahrzeug-Kupplung nach einem der Ansprüche 1 bis 8, wobei der Rampen-Strang (11) in einer inneren Bohrung (25) der Druckplatte (1) mittels axialer Laschen (26, 27, 28) des Rampen-Strangs zentriert ist, die in radialer Auflage auf der inneren Bohrung der Druckplatte sind, **dadurch gekennzeichnet, dass** vorspringende Elemente gebildet sind
- durch mindestens einen Teil der axialen Laschen (26, 27, 28) des Rampen-Strangs, der dazu bestimmt ist, die innere Bohrung der Platte zu beanspruchen, oder
- durch mindestens einen Teil der inneren Bohrung (25) der Platte (1), der dazu bestimmt ist, die axialen Laschen (26, 27, 28) des Rampen-Strangs (11) zu beanspruchen.

## Claims

1. Clutch for a motor vehicle, of the type comprising firstly an engine flywheel which rotates an annular cover (2) as well as a pressure plate (1), and a diaphragm (3), and secondly a disc (4) provided with friction linings (5) which is designed to be connected to a primary shaft of a gearbox, the clutch additionally comprising a device (9) for elimination of play, which can bring the pressure plate (1) axially towards the friction disc (4) as the latter becomes worn, and wherein an annular intermediate element (11) (or ramp strip) is arranged between the pressure plate (1) and the diaphragm (3), and is supported against the pressure plate (1) by ramps which are complementary to the ramps (11) provided on the said plate (1),
the ramp strip (11) being centred in an inner bore (25) in the pressure plate (1), and having at least one wall with an axial direction, **characterised in that** projecting elements are formed:
- by at least part of the support wall of the ramp strip, which part is designed to be supported against the inner bore in the plate; or
- by at least part of the inner bore (25) in the plate (1) which is designed to be supported against the support wall of the ramp strip (11).

2. Clutch according to claim 1, **characterised in that** the said support wall of the ramp strip comprises at least one lug or tongue (26, 27, 28).

3. Clutch according to claim 2, **characterised in that** a plurality of lugs or tongues (26, 27, 28) are provided, distributed on the periphery of the ramp strip (11).

4. Clutch according to claim 2 or 3, **characterised in that** the lugs (26, 27) are flat, i.e. parallel to the axial direction, or they form an angle relative to the latter.

5. Clutch according to any one of claims 1 to 4, **characterised in that** the ramp strip (11) comprises a continuous annular inner flank (in the form of a ring) which can be supported against the said bore in the pressure plate.

6. Clutch according to one of claims 1 to 5, **characterised in that** the projecting elements (34) form surfaces, lines, or series of points of contact.

7. Clutch according to claim 6, **characterised in that** the lines of contacts are circumferential.

8. Clutch according to any one of claims 1 to 7, **characterised in that** the said projecting elements (34) are constituted by bosses, bulges, or the like.

9. Pressure plate and ramp strip assembly for a motor vehicle clutch according to one of claims 1 to 8, the ramp strip (11) being centred in an inner bore in the pressure plate (1) by means of axial lugs (26, 27, 28) of the ramp strip, which are supported radially on the inner bore in the pressure plate, **characterised in that** projecting elements are formed:
- by at least part of the axial lugs (26, 27, 28) of the ramp strip, which part is designed to be supported against the inner bore in the plate; or
- by at least part of the inner bore (25) in the plate (1) which is designed to be supported against axial lugs (26, 27, 28) of the ramp strip (11).
